(19)

**Europäisches Patentamt**
**European Patent Office**
**Office européen des brevets**

(11) **EP 4 752 272 A1**

(12) **EUROPEAN PATENT APPLICATION**

(43) Date of publication:
03.06.2026 Bulletin 2026/23

(21) Application number: 25219012.9

(22) Date of filing: 27.11.2025

(51) International Patent Classification (IPC):
*D05B 19/02* (2006.01) *D05B 25/00* (2006.01)
*G06Q 10/0639* (2023.01)

(52) Cooperative Patent Classification (CPC):
**D05B 19/02; D05B 25/00; G06Q 10/06398;
G06Q 50/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 28.11.2024 JP 2024206867

(71) Applicant: JUKI Corporation
Tama-shi, Tokyo 206-8551 (JP)

(72) Inventors:
• FUJIMOTO, Mio
Tokyo, 206-8551 (JP)
• OKAMURA, Masahiko
Tokyo, 206-8551 (JP)

(74) Representative: Hoeger, Stellrecht & Partner
Patentanwälte mbB
Uhlandstrasse 14c
70182 Stuttgart (DE)

(54) **SEWING MANAGEMENT SYSTEM**

(57) A sewing management system includes a sewing machine (2) and a management device (3). The management device (3) includes a computation unit (13) for obtaining an operator skill indicating, in numerical form, a skill in a sewing operation of an operator who uses the sewing machine (2), and an information acquisition unit (11) for acquiring operation information (151) from the sewing machine (2) in order to obtain the operator skill. The operation information (151) includes information for acquiring an actual work time of a plurality of work processes included in the sewing operation and achieved numbers of pieces of the plurality of work processes, and the computation unit (13) obtains the operator skill on the basis of a target processing time defined for the plurality of work processes, an actual work time of the plurality of work processes, and a process difficulty defined for the plurality of work processes.

FIG.1

**Description**

TECHNICAL FIELD

The present invention relates to a sewing management system.

BACKGROUND ART

As management of operation information of a sewing machine operator of the related art, a production achievement rate of the operator has been obtained based on a time of start of work and a current actual number of pieces sewn, with respect to a set value of a target number of production pieces to be sewn in one day(see, for example, JP2020-130767A).

SUMMARY OF INVENTION

In the management of operation information of the related art, the production achievement rate obtained indicates the progress during the work time and does not indicate the operator's skill in the sewing operation.
Therefore, it is not possible to evaluate the extent of the operator's skill in the sewing operation.
An object of the present invention is to enable evaluation of an operator's skill in a sewing operation.
The present invention provides
a sewing management system configured to manage production of an object to be sewn using a sewing machine, the sewing management system including:

the sewing machine; and
a management device configured to manage the sewing machine, wherein
the management device includes
a computation unit configured to obtain an operator skill indicating, in numerical form, a skill in a sewing operation of an operator who uses the sewing machine, and
an information acquisition unit configured to acquire operation information from the sewing machine in order to obtain the operator skill,
the operation information includes information for acquiring an actual work time of a plurality of work processes included in the sewing operation and achieved numbers of pieces of the plurality of work processes, and
the computation unit obtains the operator skill on the basis of a target processing time defined for the plurality of work processes, an actual work time of the plurality of work processes, and a process difficulty defined for the plurality of work processes.

The present invention enables a skill in a sewing operation of an operator to be appropriately evaluated.

BRIEF DESCRIPTION OF DRAWINGS

Fig. 1 is a diagram illustrating a schematic configuration of a sewing management system according to the present embodiment.
Fig. 2 is a block diagram of a management device included in the sewing management system.
Fig. 3 is a block diagram of a sewing machine included in the sewing management system.
Fig. 4 illustrates a display example of a process input screen for performing various settings relating to a work process.
Fig. 5 illustrates a display example of a process display screen for displaying a list of work processes for which various settings have been performed.
Fig. 6 illustrates a display example of a device input screen for performing various settings relating to each sewing machine.
Fig. 7 is an explanatory diagram showing contents of operation information.
Fig. 8 illustrates a display example in which various parameters relating to an operator skill and a device level are displayed in a list format for a plurality of operators.
Fig. 9 illustrates a display example in the same list format as Fig. 8, in which parameters that have improved as a result of periodic calculation of the operator skill and the device level are displayed in an identifiable state.
Fig. 10 illustrates a display example of a setting screen for performing various settings relating to acquisition of the operator skill and the device level.

Fig. 11 illustrates a display example of a selection screen for selecting an aggregation date on which the operator skill and the device level are calculated.

Fig. 12 is a flowchart showing operation information generation processing.

Fig. 13 is a flowchart showing calculation processing for obtaining an operator skill of a specific operator.

Fig. 14 is a flowchart showing calculation processing for obtaining an overall device level of a specific operator.

Fig. 15 is a flowchart showing a flow of processing for displaying evaluation results.

DESCRIPTION OF EMBODIMENTS

[Overview of Sewing Management System]

Hereinafter, embodiments of the present invention will be described with reference to the drawings.

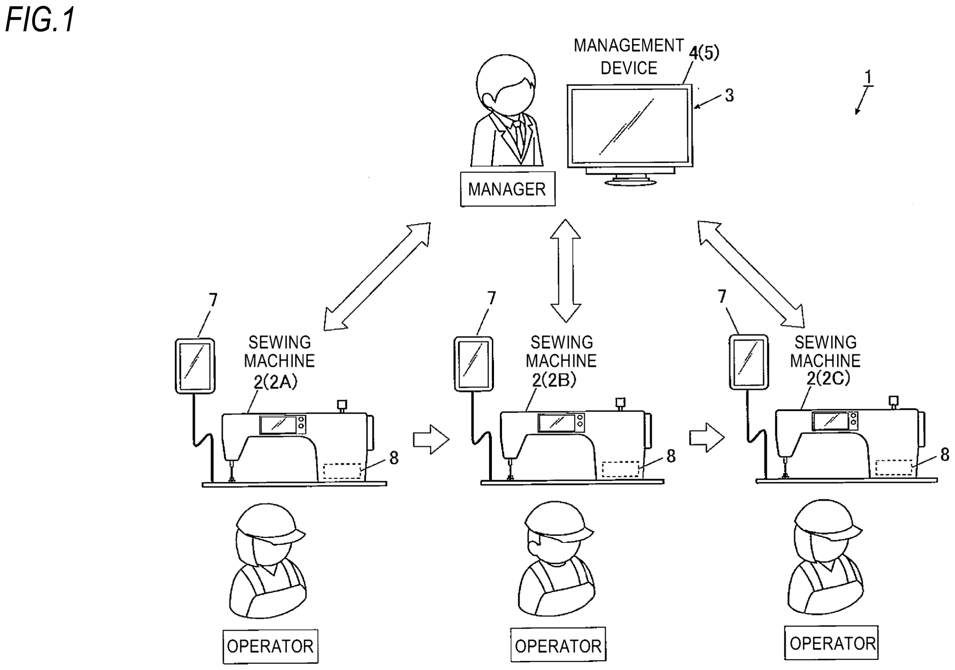

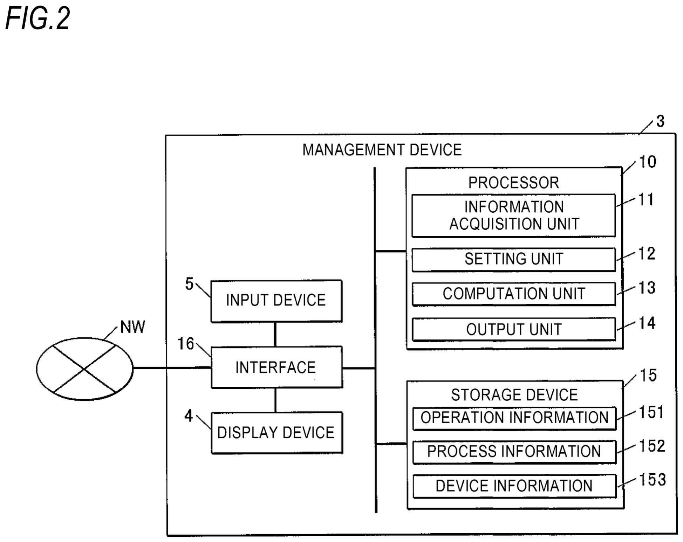

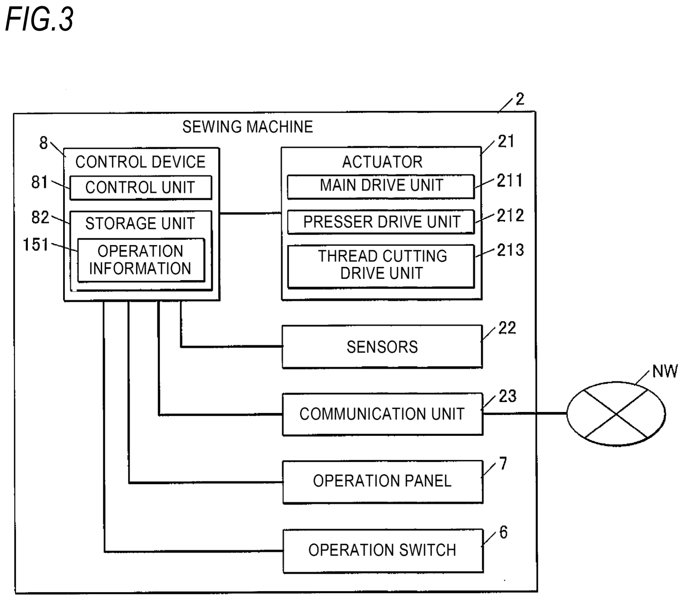

Fig. 1 is a diagram illustrating a schematic configuration of a sewing management system 1 according to the present embodiment, Fig. 2 is a block diagram of a management device 3 included in the sewing management system 1, and Fig. 3 is a block diagram of a sewing machine 2 included in the sewing management system 1.

The sewing management system 1 is a system that manages an operation status of an operator who uses a sewing machine 2. The sewing management system 1 includes sewing machines 2 and a management device 3.

For example, a plurality of sewing machines 2 are installed in a sewing factory. Each sewing machine 2 exemplifies an industrial sewing machine. Sewing is performed on an object to be sewn using each sewing machine 2, and a sewn product is produced. Examples of the object to be sewn include a sheet body such as fabric. Examples of the sewn product include clothing. Note that the number of sewing machines 2 constituting the sewing management system 1 may be one.

The management device 3 is installed in the same facility as one where the sewing machines 2 are installed. However, the management device 3 may also be installed in a remote location as long as the management device 3 can communicate predetermined information with each sewing machine 2.

In a sewing factory, sewn products are produced by the plurality of sewing machines 2. In a sewing factory, the sewing machines 2 of the same type or of multiple types according to use are installed. In a sewing factory, a plurality of work processes for producing a sewn product are assigned to each of the sewing machines 2. However, a work process of the same type may be assigned to the plurality of sewing machines 2.

Examples of the types of the sewing machines 2 include a lockstitch sewing machine for sewing a body part, a button attaching sewing machine for attaching a button to a body part, and a buttonhole sewing machine for performing buttonhole stitching. Note that the type of the sewing machine 2 is an example and may be appropriately changed according to a type of the object to be sewn and a type of its work process.

In general, multiple types and a plurality of sewing machines 2 are installed in one sewing factory. The number of the sewing machines 2 included in the sewing management system 1 may be one or more, and there is no limitation on the quantity. However, for simplification of description, only three sewing machines 2 are illustrated in Fig. 1.

As illustrated in Fig. 1, in a sewing factory, the management device 3 is used by a manager, and each sewing machine 2 is used by an operator. The manager manages the operator. The operator operates the sewing machine 2 to execute work processes of a sewing operation.

The operator may be multiple persons or a single person, and the number of operators need not match the number of the sewing machines 2. For example, one operator may operate the plurality of sewing machines 2, or multiple operators may alternately use one sewing machine 2.

[Management Device]

The management device 3 includes a display device 4 and an input device 5. The display device 4 displays display data. The display device 4 includes a flat panel display such as a liquid crystal monitor or an organic EL display. The input device 5 generates input data when operated by the manager.

The input device 5 includes a touch panel (touch sensor) arranged on a display screen of the display device 4. Note that the input device 5 may be a computer keyboard, a mouse, or a voice input device.

The management device 3 is communicably connected to the plurality of sewing machines 2 in a sewing factory. However, the management device 3 need not be capable of communicating with the sewing machines 2 in real time. The management device 3 only needs to be capable of acquiring predetermined information that has been data-converted from the sewing machine 2. Accordingly, necessary predetermined information may be transferred from the sewing machine 2 to a recording medium, and the management device 3 may acquire, from the recording medium, the predetermined information from the sewing machine 2.

The management device 3 is capable of communicating with one or a plurality of sewing machines 2. The management device 3 communicates with a control device 8 of the sewing machine 2. The management device 3 and the control device 8 communicate in a wired or wireless manner via a network NW (see Fig. 2). The management device 3 and the control device 8 communicate via a network NW such as a local area network (LAN). The management device 3 and the control device 8 may communicate via a wireless LAN such as Wi-Fi (registered trademark).

The management device 3 collects operation information 151 of each of the plurality of sewing machines 2 (see Figs. 2 and 3). The management device 3 calculates an operator skill (described below) indicating, in numerical form, a skill in a sewing operation of an operator from the operation information 151 of each of the plurality of sewing machines 2 and causes the display device 4 to display the operator skill.

As illustrated in Fig. 2, the management device 3 includes a computer system. The management device 3 includes at least one processor 10, a storage device 15 in which a computer program executable by the processor 10 is stored, and an interface 16 for the processor 10 to communicate with various devices.

The processor 10 is a computation element such as a central processing unit (CPU).

The storage device 15 includes a main memory, including a non-volatile memory such as a read only memory (ROM) and a volatile memory such as a random access memory (RAM), and a storage such as a hard disk drive or a solid state drive.

The interface 16 includes an input/output circuit for performing signal input/output with the display device 4 and the input device 5, and a communication controller for performing communication with the control device 8 of each sewing machine 2 via the network NW.

The management device 3 includes an information acquisition unit 11, a setting unit 12, a computation unit 13, and an output unit 14. The information acquisition unit 11, the setting unit 12, the computation unit 13, and the output unit 14 are function blocks that are implemented when the processor 10 executes a program stored in the storage device 15. That is, the processor 10 functions as the information acquisition unit 11, the setting unit 12, the computation unit 13, and the output unit 14 by executing the program.

The information acquisition unit 11 acquires the operation information 151 from each sewing machine 2 via the network NW. The operation information 151 of the sewing machine 2 includes, for example, input data that is input from an operation switch 6 of the sewing machine 2 described below, operation data of a thread cutting mechanism, and the like.

The setting unit 12 receives, from the manager via the input device 5, various settings relating to the sewing machine 2 belonging to the sewing management system 1 and various settings relating to various work processes of a sewing operation performed in a sewing factory where the sewing management system 1 is implemented.

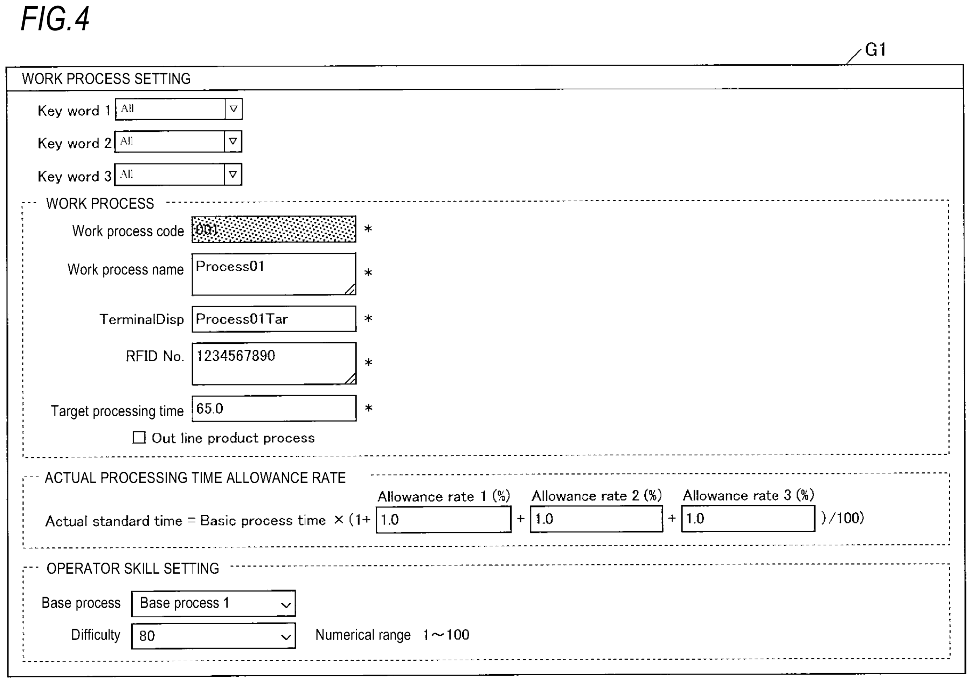

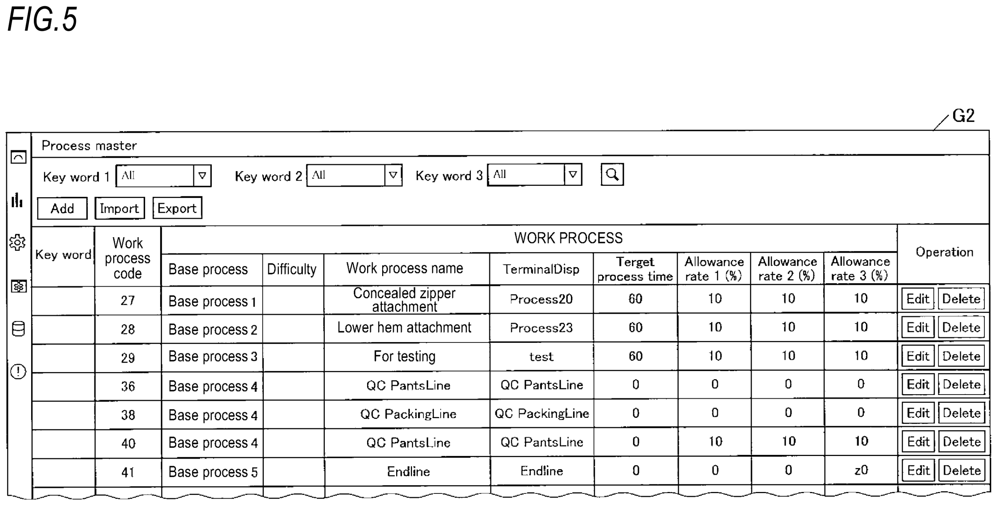

Fig. 4 illustrates a display example of a process input screen G1 for performing various settings relating to a work process, and Fig. 5 illustrates a display example of a process display screen G2 for displaying a list of work processes for which various settings have been performed.

The setting unit 12 displays an input screen G1 for work process setting on the display device 4, and receives an input from the manager operating the input device 5 with respect to various input fields displayed in the input screen G1.

The input screen G1 for work process setting includes input fields for receiving settings for one work process to be set, such as "work process name" for specifying the work process, "work process code" for numerically identifying the work process, "target processing time" required for the work process, "base process" for broadly classifying the work process, and "process difficulty" of the work process (described as "difficulty" in the input screen G1).

The setting unit 12 receives an input from the manager via the input device 5 with respect to each input field of the process input screen G1.

The contents of the respective setting items, for which settings have been received through the process input screen G1 for the work process, are stored in the storage device 15 as process information 152.

The "base process" is a setting for broadly classifying numerous work processes. That is, the setting unit 12 functions as a process setting unit that performs a setting for broadly classifying work processes into "base processes." The number of base processes is smaller than the number of work processes.

The work processes, depending on the scale of the sewing factory, may include a very large number of types according to a type of work content, a type of an object to be sewn, and the like. If the work processes are subdivided excessively, the amount of data collected for each work process becomes small, which may reduce the objectivity and reliability as materials for determining the operator's skill in the sewing operation.

Therefore, the setting unit 12 enables the numerous work processes to be broadly classified into "base processes" with fewer types.

There is no fixed rule for the classification of "base processes", but for example, it is preferable to set work processes having similar work contents to belong to one and the same "base process."

For example, Fig. 4 shows that the currently selected work process has been set to belong to "Base Process 1".

In addition, Fig. 5 shows that three work processes having work process codes 36, 38, and 40 have all been set to belong to the same "Base Process 4."

The "target processing time" is also called SAM (Standard Allotted Minutes), and is set as "a time obtained by adding an allowance time to a time required for work when an operator having a standard level of proficiency has executed a work process under standard work procedures, methods, and work conditions." That is, the setting unit 12 functions as a processing time setting unit that sets the "target processing time" of a work process.

It is preferable that the "target processing time" be a target value (ideal value) calculated under conditions set in production management.

Fig. 4 shows that the "target processing time" has been set to 65 [sec] for the currently selected work process.

The "process difficulty" is a numerical representation of the difficulty of work of the work process within a range of 1 to 100, with a larger numerical value indicating a higher difficulty. For example, regardless of differences in the operator's skill in the sewing operation, a low difficulty value is set when the difference in the work time required for the sewing process is small. In addition, conversely, a high difficulty value is set when a significant difference in the work time required for the sewing process occurs due to differences in the operator's skill in the sewing operation.

The "process difficulty" is appropriately determined by the manager, for example, based on collected and accumulated data on the work time required for the sewing process by a larger number of operators in the past. That is, the setting unit 12 also functions as a difficulty setting unit that sets the "process difficulty" of the work process.

Fig. 4 shows that the "process difficulty" has been set to 80 for the currently selected work process.

In addition, the "process difficulty" may be set individually for each sewing process, but as shown in the lower part of the process input screen G1 of Fig. 4, a selection field for "Process Difficulty" may be provided next to the selection field for "Base Process", and the process difficulty may be set for each base process.

When setting the "process difficulty" for each sewing process, it is sufficient to provide a selection field for "Process Difficulty" next to a selection field for "Sewing Process" such that the process difficulty can be set for each sewing process.

In addition, the process information 152 may include setting information specific to each work process. Although not shown in Figs. 4 and 5, for example, the setting unit 12 receives, via the input device 5, a setting of the "number of thread cutting executions" performed during sewing of each work process.

The "number of thread cutting executions" is a setting value that is required when obtaining the achieved number of pieces of a work process (the number of objects to be sewn on which sewing has been performed) from the count value of the number of thread cutting executions performed during the sewing operation.

When the "number of thread cutting executions" performed during sewing of a work process is input from the input device 5 by the manager, the setting unit 12 performs a process of recording it in the process information 152 as setting information of a selected work process.

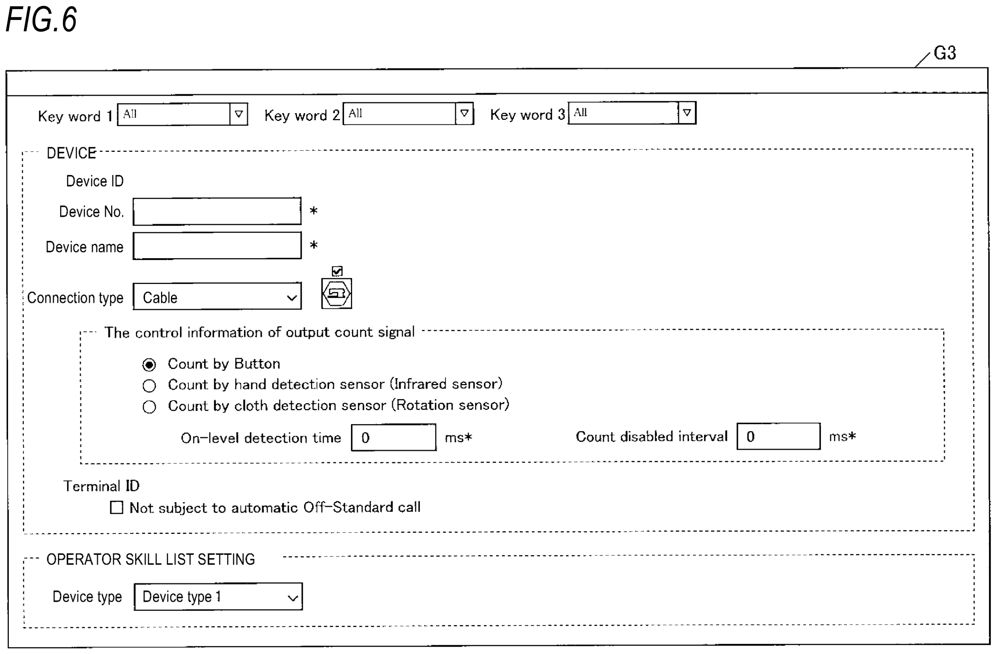

Fig. 6 illustrates a display example of a device input screen G3 for performing various settings relating to each sewing machine 2.

The setting unit 12 displays a device input screen G3 for the sewing machine 2 on the display device 4, and receives a setting input from the manager operating the input device 5 with respect to various input fields displayed in the input screen G3.

The input screen G3 for sewing machine setting includes input fields for receiving settings for one sewing machine to be set, such as "device name", which is a model name of the sewing machine 2, "device ID" for identifying the sewing machine 2 by letters, numbers, symbols, and the like, and "device type" for broadly classifying the sewing machine 2 into a more general type category.

The setting unit 12 receives an input from the manager via the input device 5 with respect to each input field of the device input screen G3.

The contents of the respective setting items, for which settings have been received through the device input screen G3 for setting of the sewing machine 2, are stored in the storage device 15 as device information 153.

The "device type" is a setting for broadly classifying the plurality of sewing machines 2 belonging to the sewing management system 1 into more general categories. That is, the setting unit 12 functions as a device setting unit that performs a setting for broadly classifying the sewing machines 2 into multiple type categories. The number of device types is smaller than the number of types of the sewing machines 2.

The sewing machines 2, depending on the scale of the sewing factory, may include many different models or may include many sewing machines 2 of the same model. In this case, if the usage history of an operator is managed individually for each sewing machine 2, it may be difficult to determine tendencies of the operator's skill in the sewing operation from the operator's usage history.

Therefore, the setting unit 12 enables the numerous sewing machines 2 to be broadly classified into fewer device types.

There is no fixed rule for the classification method of the "device type," but, for example, sewing machines of the same model are naturally classified into the same "device type," and it is also preferable to set sewing machines whose sewing work contents are functionally similar so as to belong to one and the same "device type." Alternatively, sewing machines whose operations are similar may also be classified into the same "device type."

For example, Fig. 6 shows that the currently selected sewing machine 2 has been set to belong to "Device Type 1".

The output unit 14 outputs information generated by the computation unit 13 and information set by the setting unit 12. The output unit 14 outputs a display screen for various types of information to the display device 4 via the interface 16. Specifically, the output unit 14 causes the display device 4 to display an operator skill, a device level (all described below), and the like of each operator calculated by the computation unit 13.

The storage device 15 stores a program that is executed by the processor 10, and also stores information acquired by the information acquisition unit 11 and setting information for the setting unit 12. The storage device 15 stores operation information 151 of each sewing machine 2, process information 152 of each sewing machine 2, and setting information of the device information 153.

[Sewing Machine]

Since the mechanical configuration of the sewing machine 2 is the same as that of a known sewing machine, its detailed description is omitted. The sewing machine 2 includes a control device 8, an actuator 21, sensors 22, a communication unit 23, an operation panel 7, and an operation switch 6.

The control device 8 outputs a control signal for controlling the sewing machine 2. The control device 8 is composed of a computer system. That is, the control unit 8 includes a control unit 81 including a processor such as a CPU, and a storage unit 82 including a storage device such as a read only memory (ROM) and a random access memory (RAM). In addition, the storage unit 82 stores a program for causing the processor to function as the control unit 81. The storage unit 82 stores the operation information 151 acquired from the actuator 21, the sensors 22, the operation switch 6, and the like. In addition, the storage unit 82 stores setting data and the like input from the operation panel 7.

In addition, the control device 8 transmits the operation information 151 of the sewing machine 2 to the management device 3 via the communication unit 23.

The actuator 21 includes a main drive unit 211, a presser drive unit 212, a thread cutting drive unit 213, and the like. These drive units include actuators such as electric motors and solenoids.

The main drive unit 211 is a main drive source of the sewing machine 2 for performing reciprocating driving of a needle bar of the sewing machine 2, rotation of a shuttle, feeding operation, and the like.

The presser drive unit 212 is a drive source for performing a raising and lowering operation of a presser for an object to be sewn.

The thread cutting drive unit 213 is a drive source for operating a thread cutting mechanism of the sewing machine 2. The thread cutting mechanism cuts a thread from the object to be sewn set on the sewing machine 2 at a timing when, for example, a sewing operation by the sewing machine 2 reaches a break point.

Note that the configuration of the actuator 21 is an example, and some of the configuration may not be mounted. Additionally, the sewing machine 2 may include an actuator for a use other than the above.

The sensors 22 are sensors that detect, for example, driving amounts or specific operating states of the main drive unit 211, the presser drive unit 212, and the thread cutting drive unit 213. The sensors include an encoder that detects a rotation amount of a motor, a position sensor that detects a displacement of a movable member, and the like. Detection data of the sensors 22 is output to the control device 8.

The operation switch 6 receives an operation input accompanying a sewing operation by the sewing machine 2. The operator performs an input operation on the operation switch 6, for example, at a timing when the operator faces the sewing machine 2 and starts a sewing operation, and at a timing when the operator interrupts or ends the sewing operation and moves away from the sewing machine 2. In this case, the respective times at which the operation switch 6 is operated are recorded in the operation information 151.

The operation panel 7 includes a display device, an operation device, and a microcomputer.

The display device includes a flat panel display such as a liquid crystal monitor or an organic EL display.

The operation device includes a touch panel (touch sensor) arranged on a display screen of the display device. The microcomputer includes at least one processor and a main memory in which a computer program executable by the processor is stored.

The operation panel 7 receives an input operation when the operator inputs a setting or the like to the control device 8 of the sewing machine 2, and displays information related to control of the sewing machine 2. The operation panel 7 is composed of, for example, a liquid crystal monitor having a touch panel.

For example, the operation panel 7 receives selection of a work process to be executed next by the sewing machine 2, add selection of setting data for a sewing operation to be performed in the selected work process.

When the operator repeatedly executes the same work process, the operator does not need to select the work process from the operation panel 7 each time the operator executes one work process. When the work process to be executed next is changed, the operator only needs to select a new work process from the operation panel 7.

In this case, the work process selected by the operator and a time at which the operator makes the selection from the operation panel 7 are recorded in the operation information 151.

The communication unit 23 includes a network controller for connecting the control unit 81 to the network NW. The control unit 81 communicates with the management device 3 via the communication unit 23 and the network NW.

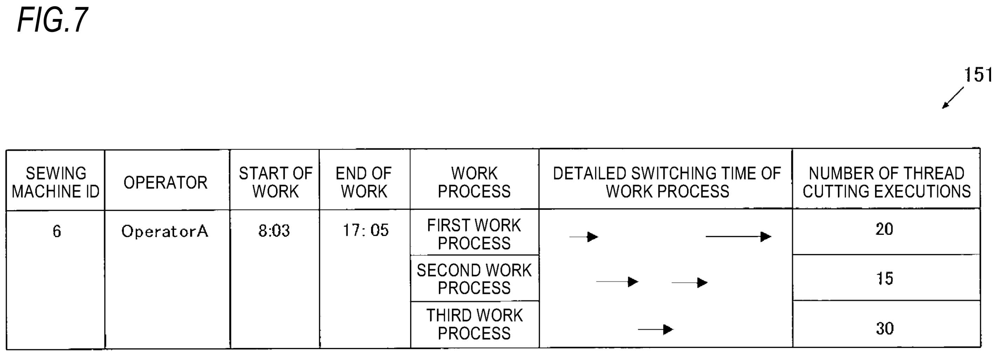

Fig. 7 is an explanatory diagram showing contents of the operation information 151 generated by the control unit 81 and transmitted to the management device 3 via the communication unit 23.

In the operation information 151, "sewing machine ID" as sewing machine specifying information for individually identifying each sewing machines 2 on a one-to-one basis, "operator" consisting of a name, identification information, or the like for specifying an operator who uses the sewing machine 2, "start of work" indicating a start time of a sewing operation, "end of work" indicating an end time of a sewing operation, "work process" indicating a work process performed by the operator with the sewing machine 2, "detailed switching time of work process" indicating a period in which each work process was performed, "number of thread cutting executions" indicating the number of thread cutting executions performed during a period in which each work process was performed, and the like are recorded.

The "sewing machine ID" is stored in the storage unit 82 of each sewing machine 2. The control unit 81, when generating the operation information 151, reads the "sewing machine ID" out from the storage unit 82 and includes it in the operation information 151.

The "operator" is input by an operator from the operation panel 7 when starting a sewing operation. Note that the "operator" may be configured such that the same "operator" is written into the operation information 151 unless the operator performs a write operation to update the "operator."

The "sewing operation" has one unit defined as a period from a time of "start of work" to a time of "end of work," and the control device 8 generates one piece of operation information 151 for one "sewing operation." Note that the computation unit 13 is not limited to generating one piece of operation information 151 for one "sewing operation", but may generate one piece of operation information 151 for each wider period or for each narrower period.

The "start of work" includes not only a start time of a first sewing operation during working hours in a day, but also a time of resumption of a first sewing operation after an "end of work" of an immediately preceding sewing operation.

The "end of work" includes not only an end of the last sewing operation during the working hours in a day, but also interruption of the sewing operation, such as a lunch break or a restroom break. It also includes interruptions that are unavoidably caused by a malfunction of the sewing machine 2. That is, a certain period of interruption that occurs between sewing operations of repeatedly performed work processes is also included in the "end of work."

When the operation switch 6 is operated, the control device 8 of the sewing machine 2 records the operation time in the operation information 151 as the time of "start of work" or the time of "end of work."

In this case, the operation switch 6 may be prepared separately as a switch indicating "start of work" and a switch indicating "end of work."

In addition, when a switch indicating "start of work" and a switch indicating "end of work" are used in common as a single operation switch 6, the recognition between "start of work" and "end of work" may be alternately switched each time the operation switch 6 is operated. For example, each odd-numbered operation time of the operation switch 6 from the start of the operator's working hours in a day may be recognized as the time of "start of work", and each even-numbered operation time of the operation switch 6 from the start of the operator's working hours in a day may may be recognized as the time of "end of work."

The "work process" is recorded in the operation information 151 when the operator selects a work process to be performed next from the operation panel 7.

The "detailed switching time of work process" indicates a start time and an end time of a "work process" selected by the operator. When the operator selects a work process to be performed next from the operation panel 7, that time is recorded in the operation information 151 as the start time. In addition, when the operator selects a work process to be performed next from the operation panel 7, that time is recorded in the operation information 151 as the end time of a work process selected immediately before.

Note that, for the last selected "work process" during the "sewing operation," the time of "end of work" is recorded in the operation information 151 as the end time of "work process."

Note that in the following description, a period from the start time to the end time of "work process" is referred to as "continuous work period."

In addition, during one "sewing operation", one work process may be performed in a divided manner across a plurality of "continuous work periods." Fig. 7 shows an example in which a first work process and a second work process are each performed in a divided manner across two "continuous work periods."

The "number of thread cutting executions" is monitored by the control unit 81 by monitoring driving of the thread cutting drive unit 213, and when the driving of the thread cutting drive unit 213 is detected, a count is performed and recorded in the operation information 151.

The "number of thread cutting executions" is counted individually for each "work process."

[Operator Skill Calculation]

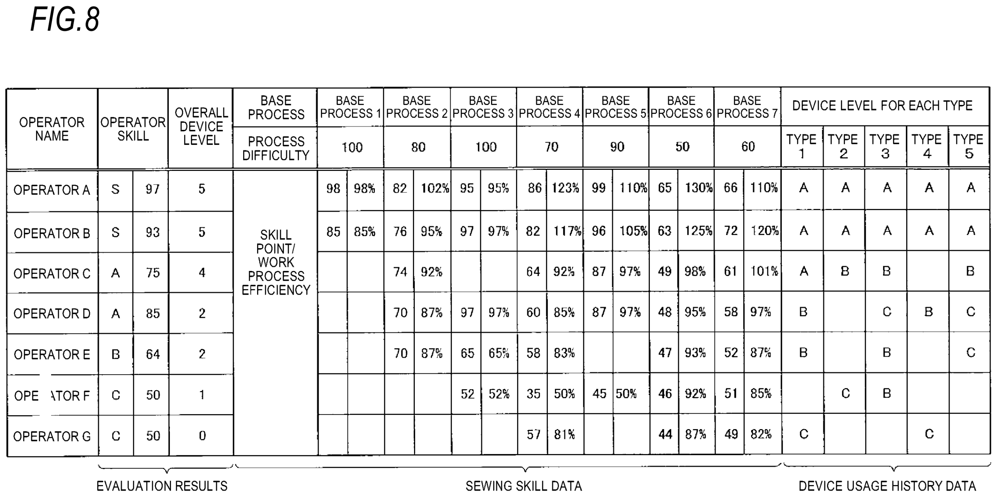

Fig. 8 illustrates a display example in which, for operators A to G, "operator skills" calculated from a plurality of pieces of operation information 151 and process information 152 accumulated over a fixed period, "device levels" calculated from the plurality of pieces of operation information 151 and device information 153, and various parameters related thereto are output to the display device 4 in a table format.

The "operator skill" is calculated for each operator for each fixed period on the basis of the plurality of pieces of operational information 151 accumulated over the fixed period. The fixed period may be set arbitrarily, but here, one month is used as an example. Hereinafter, the fixed period is referred to as "aggregation period."

A method of calculating the "operator skill" of the operator by the computation unit 13 will be described.

In the range labeled "sewing skill data" in Fig. 8, "skill point" and "work process efficiency" obtained for each base process are displayed.

The "work process efficiency" is a work efficiency for each base process performed by the operator.

The "skill point" is a numerical representation of each operator's skill for each base process, obtained by multiplying the "work process efficiency" of the base process by the "process difficulty" of the base process.

The "work process efficiency" may be obtained using the following formula.

[work process efficiency] = {total value of ([achieved number of pieces of work process] × [target work time] over entire aggregation period) for each work process belonging To base process} ÷ {total value of ([total work time of work process] over entire aggregation period) for each work process belonging to base process}

The "achieved number of pieces of work process" is obtained by dividing the "number of thread cutting executions" in a specific work process recorded in the operation information 151 by the "number of thread cutting executions" set in the process information 152 for the same work process.

The "target work time" is a value of "target work time" (SAM) set in the process information 152 for a specific work process.

By multiplying "achieved number of pieces of work process" by the "target work time," an ideal work time in a case where sewing for the achieved number of pieces is performed according to the "target work time" is calculated for a specific work process.

The "total work time of work process" can be obtained, for a specific work process, from the "continuous work period" from the start time to the end time of "work process," which are indicated by the "detailed switching time of work process" included in the operation information 151.

The "total work time of work process" corresponds to the "actual work time" of work process.

The computation unit 13 calculates, for each work process belonging to a base process, [achieved number of pieces of work process] × [target work hours] over the entire aggregation period, and sums the values for all work processes belonging to the base process.

In addition, the computation unit 13 obtains, for each work process belonging to a base process, the "total work time of work process" over the entire aggregation period, and sums the values for all work processes belonging to the base process.

Then, the computation unit 13 can calculate the "work process efficiency" in a specific base process by dividing the former total value by the latter total value.

In Fig. 8, the value of "work process efficiency" is expressed as a percentage by multiplying the calculated value by 100.

The "skill point" can be obtained using the following formula.

[skill point] = [work process efficiency] × [process difficulty],calculated by multiplying these numerical values.

The computation unit 13 calculates the "skill point" by multiplying the "work process efficiency" obtained for a specific base process by the "process difficulty" determined for the same base process. The computation unit 13 calculates the "skill point" for all base processes.

The "process difficulty" can be acquired by reading it out from the process information 152.

Then, the computation unit 13 compares the values of "skill point" obtained for each base process, performs statistical processing on a predetermined number of the highest-ranked "skill points," and calculates a value of the operator skill.

In the example of Fig. 8, the "skill points" up to the third highest among all base processes are selected, and averaging processing as the statistical processing is performed to calculate the operator skill. Note that the computation unit 13 may perform statistical processing other than averaging. In addition, the predetermined number of "skill points" may also be weighted according to their ranks.

In addition, the number of "skill points" that the computation unit 13 sequentially selects from the highest for calculating the operator skill can be set arbitrarily by the setting unit 12.

In addition, as shown in Fig. 8, the computation unit 13 divides the ranks into five levels of S, A, B, C, and D from the top, based on the numerical value of the operator skill. The storage device 15 stores thresholds of the operator skill set for each of the ranks S, A, B, C, and D, and the computation unit 13 can determine a rank for each operator by referring to the respective thresholds. The threshold for each rank can be set arbitrarily by the setting unit 12.

[Device Level Calculation]

The "device level" is a numerical value that represents, for each operator, the degree of usage experience corresponding to the number of times of use of the plurality of sewing machines 2.
The "device level" is calculated for each operator, without dividing the period, based on the plurality of pieces of operation information 151 and device information 153 accumulated in the past.
In the range labeled "device usage history data" in Fig. 8, the "device level" obtained for each of the plurality of device types (labeled as "type" in Fig. 8) is displayed for each operator.
The "device level" represents the degree of usage experience according to the number of times of use of a sewing machine of a specific device type, ranked into three levels of A, B, and C, and an out-of-determination.
The "number of times of use" of a sewing machine is calculated by, for a specific operator, picking up all pieces of the operation information 151 of the sewing machines 2 belonging to a specific device type, calculating the achieved number of pieces of each work process from the number of thread cutting executions of each work process in the operation information 151, and summing the achieved numbers of pieces without distinguishing between work processes. Accordingly, the computation unit 13 acquires, for each operator, the number of times of use of the sewing machine of each device type.
The storage device 15 stores thresholds of the number of times of use set for the respective ranks A, B, and C, and the computation unit 13 can specify, for each operator, a rank of the number of times of use of the sewing machine of each device type by referring to the respective thresholds. Note that the blank fields in the device level of Fig. 8 indicate an out-of-rank.
Each of the thresholds can be set arbitrarily by the setting unit 12.
Furthermore, the computation unit 13 sums, for each operator, the numbers of A-rank determinations and B-rank determinations, and calculates the "overall device level" from the resulting total value.
For example, for operator A in Fig. 8, the number of A-rank determinations is 5 for each device type and the counts of the other ranks are 0, so the "overall device level" is 5.
In addition, for operator F, the number of A-rank determinations is 0, the number of B-rank determinations is 1, the number of C-rank determinations is 1, and the number of out-of-rank determinations is 3 for each device type, so the "overall device level" is 1.

[Evaluation Result Display Control]

The computation unit 13 of the management device 3 periodically executes the calculations of the operator skill and the device level.
Then, the output unit 14, based on the calculation results of the computation unit 13, executes control to display, on the display unit 4, the operator skill, the device level, and various parameters related thereto in a table format shown in Fig. 8.
Then, the output unit 14 performs processing in which all parameters, including the operator skill and the device level displayed in the table shown in Fig. 8, are compared before and after the periodic calculation by the computation unit 13, and the display is updated only for the parameters that have improved as a result of the periodic calculation. In addition, for the parameters that have improved, an identification display such as changing the background color is performed so that they can be distinguished from the other parameters.
Note that for parameters whose values have declined, the display is not updated, and the content before the periodic calculation is displayed as is.

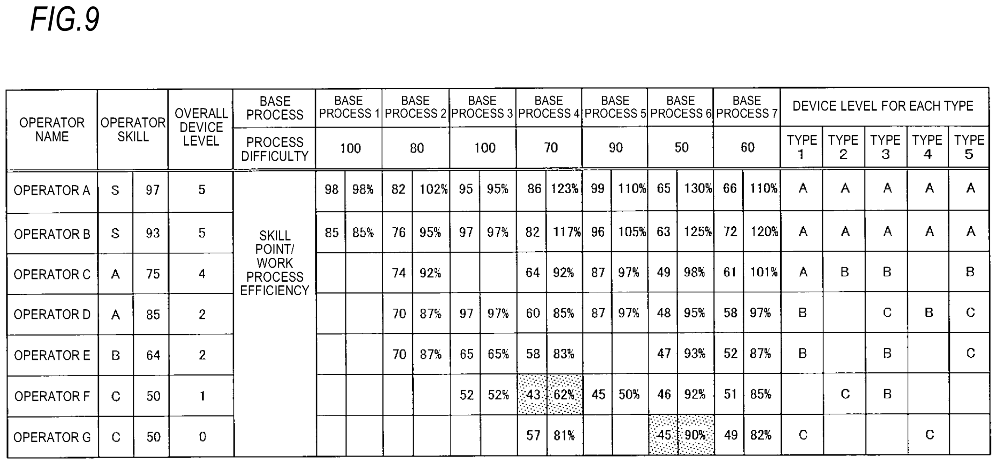

Fig. 9 illustrates an example of a table-format display in which parameters that have improved as a result of the periodic calculation are displayed in an identifiable state.
In this display example, the "skill point" and the "work process efficiency" in the base process 4 of operator F and the base process 6 of operator G are improved, and are displayed in an identifiable state.

[Reception of Various Setting Inputs]

As described above, when calculating the operator skill, the computation unit 13 selects a predetermined number of the highest-ranked skill points from among the skill points of the plurality of base processes. The number of highest-ranked skill points to be selected can be set arbitrarily.

In addition, as described above, the computation unit 13 can arbitrarily set the thresholds used for ranking the operator skill.

Additionally, as described above, the computation unit 13 can arbitrarily set the thresholds for the number of times of use of the sewing machine used for ranking the device level.

Furthermore, as described above, the computation unit 13 can periodically perform the calculations of the operator skill and the device level and arbitrarily set the execution date (aggregation date) of the calculations.

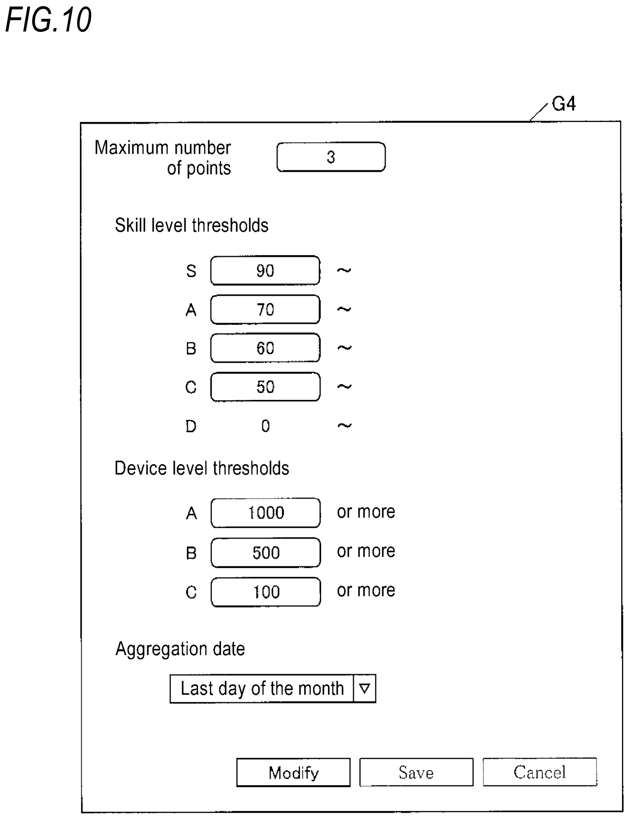

These settings can be performed through the setting screen G4 of Fig. 10 displayed on the display device 4 by the output unit 14 of the management device 3, together with the input operations from the input device 5.

The setting unit 12 stores each setting value in the storage unit 15 by an input from the input device 5 accompanying the display of the setting screen G4 of Fig. 10.

In the display example of the setting screen G4 of Fig. 10, the setting is performed by entering, in the field "Maximum Number of Points", the number of highest-ranked skill points to be selected in the calculation of the operator skill by the computation unit 13.

In addition, in the display example of the setting screen G4, the respective thresholds are set by entering thresholds in the S-rank , A-rank, B-rank, and C-rank fields of "Skill Level Thresholds." Note that, although no numerical value is entered in the D-rank field, the D-rank is determined when the skill point does not reach the C-rank threshold.

In addition, in the display example of the setting screen G4, the respective thresholds are set by entering thresholds in the A-rank, B-rank, and C-rank fields of "Device Level Thresholds."

In addition, the aggregation date on which the operator skill and the device level are calculated can be selected and set from the field "Aggregation Date" of the setting screen G4.

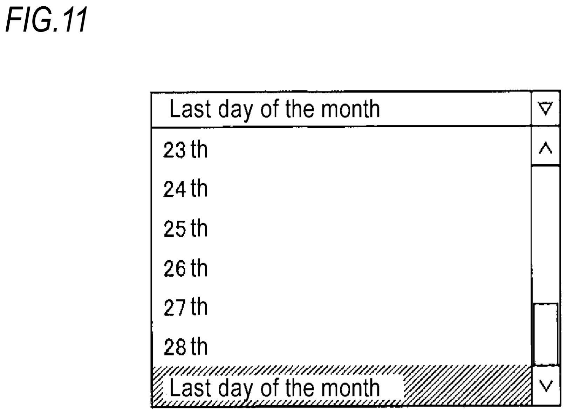

In the field "Aggregation Date" of the setting screen G4, the selection screen illustrated in Fig. 11 is displayed in response to an input operation, and the aggregation date can be selected from the candidates for aggregation date listed in the selection screen.

Note that not only the aggregation date but also the cycle for calculating the operator skill and the device level may be set arbitrarily.

[Operation Information Generation processing]

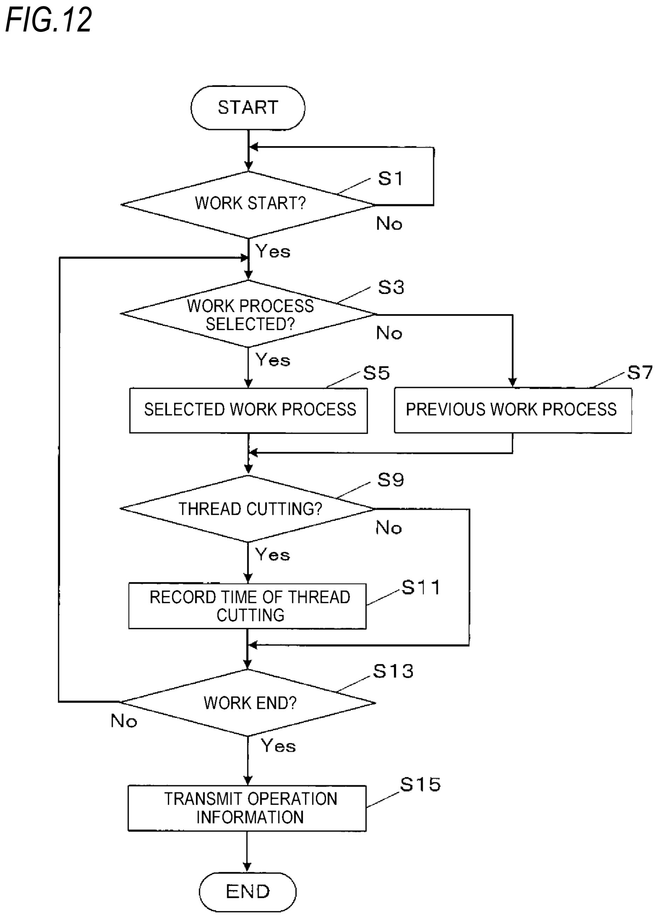

Fig. 12 is a flowchart showing generation processing of the operation information 151 that is performed by the control unit 81 of the sewing machine 2. The generation processing of the operation information 151 will be sequentially described.

First, the control unit 81 of the sewing machine 2 monitors whether the operation switch 6 is operated. When an input operation on the operation switch 6 by the operator is detected, the control unit records the current time in the operation information 151 and determines whether the input operation on the operation switch 6 is "start of sewing" (step S1).

If the input operation on the operation switch 6 is not "start of sewing," the control unit continues the monitoring of step S1.

In addition, if the input operation on the operation switch 6 is "start of sewing," the control unit 81 monitors start of driving of the main drive unit 211, and determines whether a "work process" has been selected from the operation panel 7 by the operator before the start of driving (step S3).

When a "work process" has been selected, the control unit 81 starts the selected "work process" (step S5) and records the time at which the "work process" was selected in the operation information 151.

However, in the case of a selection of the "work process" accompanying the first start of driving of the main drive unit 211 after "start of sewing," the control unit need not record the current time in the operation information 151.

The recording of the current time accompanying the selection of the "work process" in step S5 is a process for recording the start time of the newly selected "work process." However, in the case of a selection of the "work process" accompanying the first start of driving of the main drive unit 211 after "start of sewing," the time of "start of sewing" may be regarded as the start time of the "work process," and therefore, recording to the operation information 151 need not be performed.

In addition, if no "work process" has been selected, the control unit recognizes that a "work process" immediately preceding the last selected work process is continuing (step S7).

Next, the control unit 81 determines whether thread cutting has been performed by driving of the thread cutting drive unit 213 (step S9).

If no thread cutting has been performed, the control unit 81 proceeds to step S13.

On the other hand, if thread cutting has been performed, the control unit 81 records the current time as the execution time of the thread cutting in the operation information 151 (step S11).

Next, the control unit 81 monitors whether the operation switch 6 is operated (step S13), and if an input operation on the operation switch 6 by the operator is detected, the control unit records the current time in the operation information 151 as the time of "end of sewing".

Then, the control unit 81 transmits the operation information 151 to the management device 3 (step S15), and ends the generation process of the operation information 151.

On the other hand, if an input operation on the operation switch 6 by the operator is not detected, the control unit 81 repeats the processes of steps S3 to S13.

[Operator Skill Calculation Processing]

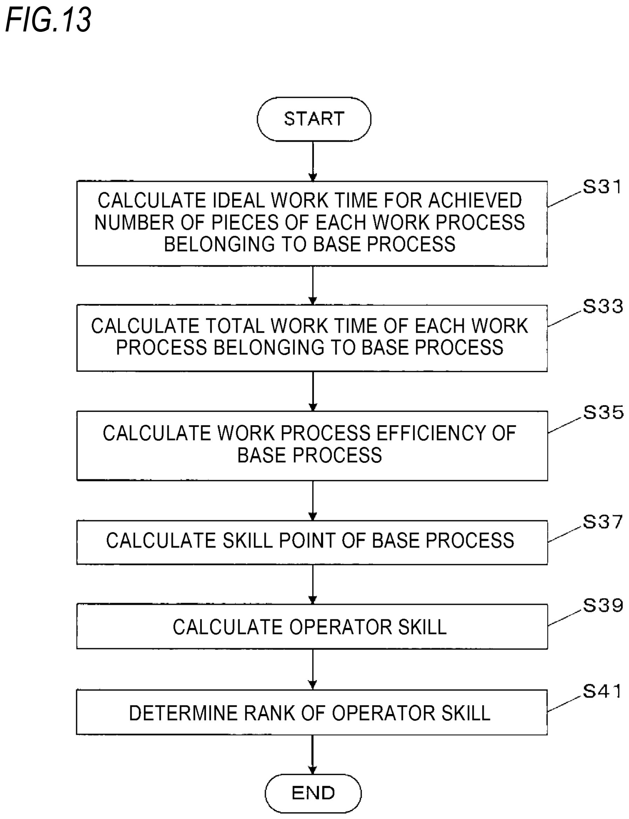

Fig. 13 is a flowchart showing calculation processing in which the processor 10 of the management device 3 obtains an operator skill of a specific operator on the basis of the operation information 151 and the process information 152 acquired from the control unit 81 of the sewing machine 2. The operator skill calculation processing will be sequentially described.

The computation unit 13 of the processor 10 uses, as a processing target, the operation information 151 for one month of a specific operator, and, for each work process, calculates the achieved number of pieces for one month of the work process and multiplies it by the "target work time" of the work process to calculate the "ideal work time."

In addition, the computation unit calculates the "ideal work time" of the base process by summing the "ideal work times" of all work processes belonging to a specific base process (step S31).

Next, the computation unit 13 calculates, for each work process, the "total work time of work process" (actual work time) by summing the "continuous work period" from the start time to the end time of "work process" included in the operation information 151 for one month.

In addition, the computation unit calculates the "total work time of work process" of the base process by summing the "total work time of work process" of all work processes belonging to the same base process (step S33).

Next, the computation unit 13 calculates the work process efficiency in the base process by dividing the "ideal work time" of the base process by the "total work time of work process" of the base process (step S35).

Note that the calculated work process efficiency may be converted into a percentage by multiplying its numerical value by 100.

Next, the computation unit 13 calculates the skill point in the base process by multiplying the work process efficiency in the base process by the process difficulty defined for the base process (step S37).

Note that the processes of steps S31 to S37 are executed for all the base processes.

Next, the computation unit 13 calculates the operator skill by performing statistical processing on the three highest-ranked skill points of the operator (step S39).

Additionally, the computation unit 13 determines the rank of the operator skill by comparing the value of the operator skill with the threshold of each rank (step S41).

Then, the operator skill calculation processing is ended.

Note that the processes of steps S31 and S33 may be performed in reversed order.

[Device Level Calculation Processing]

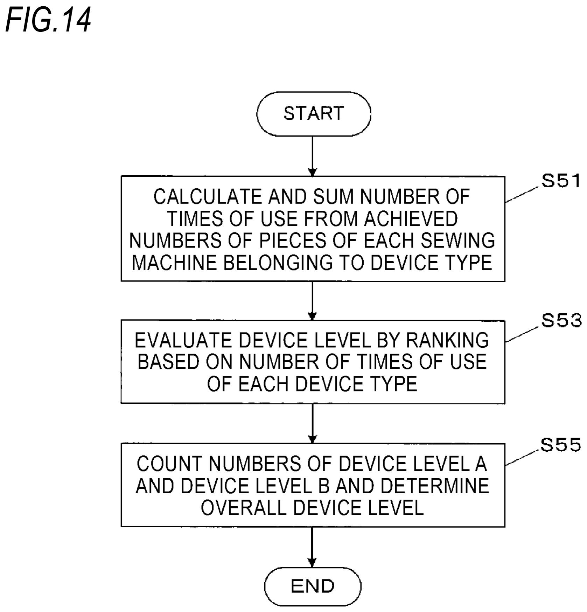

Fig. 14 is a flowchart showing calculation processing in which the processor 10 of the management device 3 obtains an overall device level of a specific operator on the basis of the operation information 151 and the device information 153 acquired from the control unit 81 of the sewing machine 2. The overall device level calculation processing will be sequentially described.

The computation unit 13 of the processor 10 uses, as a processing target, all the operation information 151 acquired in the past for a specific operator, obtains, from among the operation information, the achieved number of pieces for each work process performed by each sewing machine 2, and sums the achieved numbers of pieces for each sewing machine 2 without distinguishing between work processes. The total value of the achieved numbers of pieces of each sewing machine 2 corresponds to the number of times of use of each sewing machine 2.

Then, the computation unit calculates, for each device type, the total number of times of use of the entire device type by further summing the number of times of use of each sewing machine 2 belonging to each device type (step S51).

Next, the computation unit 13 compares, for each device type, the number of times of use of the entire device type with the threshold of each rank, and determines the device level for each device type (step S53).

Next, the computation unit 13 counts, for each device type of the operator, the number of device level A and the number of device level B, and determines the total value of these values as the overall device level (step S55).

Then, the device level calculation processing is ended.

[Flow of Evaluation Result Display Control]

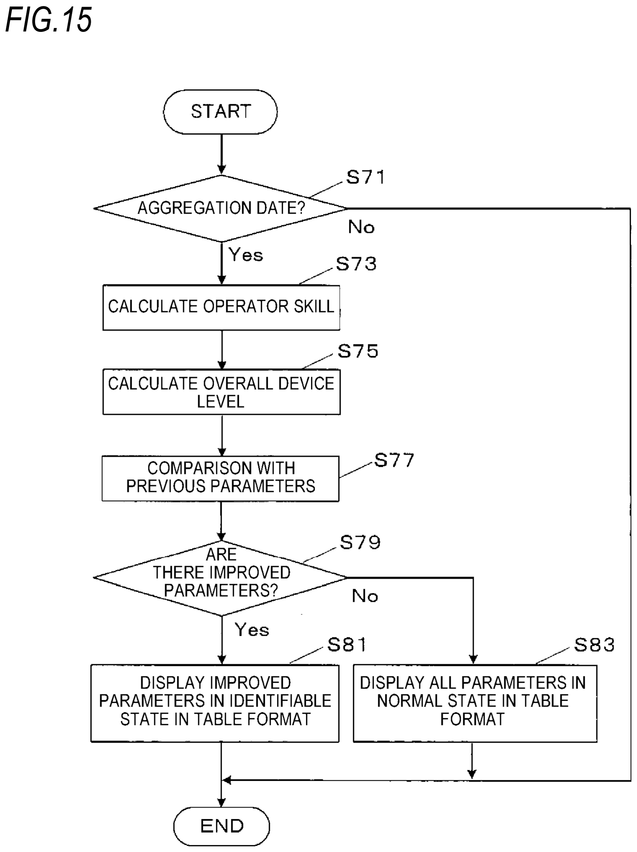

Fig. 15 is a flowchart showing a flow of processing for displaying evaluation results, which is performed by the processor 10 of the management device 3.

The computation unit 13 of the management device 3 determines whether the aggregation date on which the operator skill and the device level are calculated has arrived (step S71).

When the aggregation date has not arrived, the processing is ended.

On the other hand, when the aggregation date has arrived, the computation unit 13 calculates the operator skill of each operator (step S73) and calculates the overall device level of each operator (step S75).

Then, the output unit 14 compares various parameters, including the operator skill of each operator, the skill point and the work process efficiency for each base process, the overall device level, and the device level for each device type, obtained through the calculation by the computation unit 13 with the previous parameters (step S77), and determines whether there are improved parameters (step S79).

When there are improved parameters, the output unit 14 displays each parameter on the display device 4 in the table format shown in Fig. 8, and performs identification display for the improved parameters (step S81). Note that, if any parameters have declined among the parameters shown in the table format, the contents of the declined parameters are not displayed, and the contents of the previous parameters are maintained and displayed.

Then, the output unit 14 ends the evaluation result display processing.

If there are no improved parameters, the output unit 14 displays each parameter on the display device 4 in the table format shown in Fig. 8 without identification display (step S83). In this case as well, the contents of any parameters that have declined are not displayed, and the contents of the previous parameters are maintained and displayed.

Then, the output unit 14 ends the evaluation result display processing.

[Technical Effects of Embodiment of Invention]

The management device 3 of the sewing management system 1 includes the computation unit 13 that obtains the operator skill of an operator who uses the sewing machine 2, and the information acquisition unit 11 that acquires the operation information 151 from the sewing machine 2.

In addition, the operation information 151 includes information on the time at which each work process was selected for acquiring the total work time (actual work time) for each of a plurality of work processes included in the sewing operation performed by the operator, and information on the time of thread cutting execution for acquiring the achieved number of pieces for each work process.

Accordingly, the computation unit 13 can obtain the operator skill on the basis of the target processing time and process difficulty set for each work process and the operation information 151.

Therefore, the management device 3 can provide the operator skill as materials for evaluating the operator's skill in the sewing operation for the operator, and the manager can appropriately determine the operator's skill.

In addition, the management device 3 includes the setting unit 12 that performs a setting for broadly classifying a plurality of work processes into base processes, and the computation unit 13 obtains the operator skill from the skill point for each of the plurality of base processes, the skill point being obtained by multiplying the work process efficiency obtained for each of the plurality of base processes by the process difficulty.

The work process efficiency is an index indicating how efficiently the work process was performed, and the process difficulty is a coefficient to be multiplied by the work process efficiency.

Since the skill point is a value obtained by multiplying the work process efficiency by a coefficient indicating the difficulty, differences in the operator's skill can be prominently expressed numerically.

When the work processes are diverse, if the work process efficiency, the process difficulty, and the skill point are obtained for each work process, the directionalities for evaluating the operator's skill become excessively numerous, making it difficult to grasp the tendencies of the operator's skill.

However, even when the work processes are diverse, by broadly classifying them into a smaller number of base processes, the directionalities for evaluating the operator's skill are narrowed, making it easier to grasp the tendencies of the operator's skill.

In addition, the management device 3 includes the setting unit 12 that sets the process difficulty of the work process. Since the process difficulty is a coefficient for prominently expressing differences in the operator's skill numerically, the manager can freely and appropriately set the coefficient while taking empirical rules and the like into consideration, and can appropriately evaluate the operator's skill according to the actual circumstances.

Additionally, the management device 3 includes the setting unit 12 that sets the target processing time of each work process. Accordingly, the target processing time of each work process can be appropriately adjusted, making it possible to obtain the operator skill under conditions that satisfy the manager's requirements or actual circumstances.

In addition, the computation unit 13 of the management device 3 obtains the device level corresponding to the number of times of use of each sewing machine 2 from the operation information 151 in which the sewing machine ID is recorded.

Therefore, an index indicating with which sewing machines the operator has accumulated sewing experience can be obtained, and the manager can grasp the tendencies of the operator's experience.

In particular, the management device 3 includes the setting unit 12 that performs a setting for broadly classifying the plurality of sewing machines 2 into a plurality of device types, and the computation unit 13 obtains the device level for each device type from the operation information 151.

Therefore, when the sewing management system 1 includes many sewing machines 2, the types of device levels become excessively numerous, and the directionalities of the tendencies of the operator's experience increase excessively, making it difficult to grasp the tendencies of the operator's experience.

However, even when the management device 3 includes many sewing machines 2, by broadly classifying them into a smaller number of base processes, the directionalities indicating the tendencies of the operator's experience can be narrowed, making it easier to grasp the tendencies of the operator's experience.

[Others]

The embodiment of the present invention has been described. However, the present invention is not limited to the above embodiment. For example, in the above embodiments, a component integrally formed by a single member may be replaced with a component divided into a plurality of members and connected or fixed to each other. Additionally, a component formed by connecting a plurality of members may be replaced with a component formed integrally by a single member. In addition, the details described in the embodiments may be appropriately changed without departing from the spirit of the invention.

In addition, in the sewing machine 2, the number of thread cutting executions is recorded in the operation information 151 in order to acquire the achieved number of pieces of the work process or the number of times of use of the sewing machine 2. However, the sewing machine may also be configured such that, each time one work process for one object to be sewn is completed, the operator inputs completion using a button or the like, and the number of such inputs is recorded in the operation information 151.

In addition, the sewing machine 2 may be configured to receive input of operator identification information such as an operator ID for identifying the operator, and to have the control unit 81 add the operator identification information to the operation information 151 and transmit it to the management device 3.

**Claims**

1. A sewing management system configured to manage production of an object to be sewn using a sewing machine, the sewing management system comprising:

   the sewing machine; and
   a management device configured to manage the sewing machine, wherein
   the management device comprises
   a computation unit configured to obtain an operator skill indicating, in numerical form, a skill in a sewing operation of an operator who uses the sewing machine, and
   an information acquisition unit configured to acquire operation information from the sewing machine in order to obtain the operator skill,
   the operation information comprises information for acquiring an actual work time of a plurality of work processes included in the sewing operation and achieved numbers of pieces of the plurality of work processes, and
   the computation unit obtains the operator skill on the basis of a target processing time defined for the plurality of work processes, an actual work time of the plurality of work processes, and a process difficulty defined for the plurality of work processes.

2. The sewing management system according to claim 1, further comprising a process setting unit configured to perform a setting for broadly classifying the plurality of work processes into base processes, wherein

   the process difficulty is defined for each base process, and
   the computation unit obtains the operator skill from skill points of the plurality of base processes, the skill points being obtained by multiplying a work process efficiency obtained for the plurality of base processes by the process difficulty of each of the base processes.

3. The sewing management system according to claim 1, wherein the management device comprises a difficulty setting unit configured to set the process difficulty of the work process.

4. The sewing management system according to claim 1, wherein the management device comprises a processing time setting unit configured to set the target processing time of the work process.

5. The sewing management system according to claim 1, wherein the sewing management system comprises a plurality of the sewing machines,

 the operation information comprises a sewing machine specifying information for specifying which of the sewing machines was used, and
 the computation unit obtains a device level corresponding to the number of times of use of the plurality of sewing machines from the operation information.

6. The sewing management system according to claim 5, wherein the management device comprises a device setting unit configured to perform a setting for broadly classifying the plurality of sewing machines into a plurality of device types, and

the computation unit obtains, for each of the plurality of device types, the device level according to the number of times of use of the sewing machine belonging to each of the device types from the operation information.

FIG.1

*FIG.2*

MANAGEMENT DEVICE — 3

PROCESSOR — 10

INFORMATION ACQUISITION UNIT — 11

SETTING UNIT — 12

COMPUTATION UNIT — 13

OUTPUT UNIT — 14

STORAGE DEVICE — 15

OPERATION INFORMATION — 151

PROCESS INFORMATION — 152

DEVICE INFORMATION — 153

INPUT DEVICE — 5

INTERFACE — 16

DISPLAY DEVICE — 4

NW

FIG.3

SEWING MACHINE — 2

8 — CONTROL DEVICE
81 — CONTROL UNIT
82 — STORAGE UNIT
151 — OPERATION INFORMATION

21 — ACTUATOR
211 — MAIN DRIVE UNIT
212 — PRESSER DRIVE UNIT
213 — THREAD CUTTING DRIVE UNIT

22 — SENSORS

NW

23 — COMMUNICATION UNIT

7 — OPERATION PANEL

6 — OPERATION SWITCH

# FIG.4

EP 4 752 272 A1

/G1

**WORK PROCESS SETTING**

Key word 1 | All ▽ |

Key word 2 | All ▽ |

Key word 3 | All ▽ |

## WORK PROCESS

Work process code | 001 | *

Work process name | Process01 | *

TerminalDisp | Process01Tar | *

RFID No. | 1234567890 | *

Target processing time | 65.0 | *

☐ Out line product process

## ACTUAL PROCESSING TIME ALLOWANCE RATE

| Allowance rate 1 (%) | Allowance rate 2 (%) | Allowance rate 3 (%) |

Actual standard time = Basic process time × (1+ | 1.0 | + | 1.0 | + | 1.0 | )/100)

## OPERATOR SKILL SETTING

Base process | Base process 1 ⌄ |

Difficulty | 80 ⌄ | Numerical range 1〜100

# FIG.5

EP 4 752 272 A1

G2

**Process master**

Key word 1 [All ▽]   Key word 2 [All ▽]   Key word 3 [All ▽]   [🔍]

[Add] [Import] [Export]

| Key word | Work process code | WORK PROCESS | | | | | | | | Operation | |
|---|---|---|---|---|---|---|---|---|---|---|---|
| | | Base process | Difficulty | Work process name | TerminalDisp | Terget process time | Allowance rate 1 (%) | Allowance rate 2 (%) | Allowance rate 3 (%) | | |
| | 27 | Base process 1 | | Concealed zipper attachment | Process20 | 60 | 10 | 10 | 10 | Edit | Delete |
| | 28 | Base process 2 | | Lower hem attachment | Process23 | 60 | 10 | 10 | 10 | Edit | Delete |
| | 29 | Base process 3 | | For testing | test | 60 | 10 | 10 | 10 | Edit | Delete |
| | 36 | Base process 4 | | QC PantsLine | QC PantsLine | 0 | 0 | 0 | 0 | Edit | Delete |
| | 38 | Base process 4 | | QC PackingLine | QC PackingLine | 0 | 0 | 0 | 0 | Edit | Delete |
| | 40 | Base process 4 | | QC PantsLine | QC PantsLine | 0 | 10 | 10 | 10 | Edit | Delete |
| | 41 | Base process 5 | | Endline | Endline | 0 | 0 | 0 | z0 | Edit | Delete |

FIG.6

G3

Key word 1 | All ▽ |  Key word 2 | All ▽ |  Key word 3 | All ▽ |

DEVICE

Device ID

Device No. | _____ | *

Device name | _____ | *

Connection type | Cable ⌄ |  ☑

The control information of output count signal

⦿ Count by Button
◯ Count by hand detection sensor (Infrared sensor)
◯ Count by cloth detection sensor (Rotation sensor)

On-level detection time | 0 | ms*     Count disabled interval | 0 | ms*

Terminal ID

☐ Not subject to automatic Off-Standard call

OPERATOR SKILL LIST SETTING

Device type | Device type 1 ⌄ |

EP 4 752 272 A1

FIG.7

EP 4 752 272 A1

151

| SEWING MACHINE ID | OPERATOR | START OF WORK | END OF WORK | WORK PROCESS | DETAILED SWITCHING TIME OF WORK PROCESS | NUMBER OF THREAD CUTTING EXECUTIONS |
|---|---|---|---|---|---|---|
| 6 | OperatorA | 8:03 | 17:05 | FIRST WORK PROCESS | →        → | 20 |
| | | | | SECOND WORK PROCESS | →   → | 15 |
| | | | | THIRD WORK PROCESS | → | 30 |

## FIG.8

| OPERATOR NAME | OPERATOR SKILL | | OVERALL DEVICE LEVEL | BASE PROCESS / PROCESS DIFFICULTY | BASE PROCESS 1 / 100 | | BASE PROCESS 2 / 80 | | BASE PROCESS 3 / 100 | | BASE PROCESS 4 / 70 | | BASE PROCESS 5 / 90 | | BASE PROCESS 6 / 50 | | BASE PROCESS 7 / 60 | | DEVICE LEVEL FOR EACH TYPE TYPE 1 | TYPE 2 | TYPE 3 | TYPE 4 | TYPE 5 |
|---|---|---|---|---|---|---|---|---|---|---|---|---|---|---|---|---|---|---|---|---|---|---|---|
| OPERATOR A | S | 97 | 5 | SKILL POINT/ WORK PROCESS EFFICIENCY | 98 | 98% | 82 | 102% | 95 | 95% | 86 | 123% | 99 | 110% | 65 | 130% | 66 | 110% | A | A | A | A | A |
| OPERATOR B | S | 93 | 5 | | 85 | 85% | 76 | 95% | 97 | 97% | 82 | 117% | 96 | 105% | 63 | 125% | 72 | 120% | A | A | A | A | A |
| OPERATOR C | A | 75 | 4 | | | | 74 | 92% | | | 64 | 92% | 87 | 97% | 49 | 98% | 61 | 101% | A | B | B | | B |
| OPERATOR D | A | 85 | 2 | | | | 70 | 87% | 97 | 97% | 60 | 85% | 87 | 97% | 48 | 95% | 58 | 97% | B | | C | B | C |
| OPERATOR E | B | 64 | 2 | | | | 70 | 87% | 65 | 65% | 58 | 83% | | | 47 | 93% | 52 | 87% | B | | B | | C |
| OPERATOR F | C | 50 | 1 | | | | | | 52 | 52% | 35 | 50% | 45 | 50% | 46 | 92% | 51 | 85% | | | C | B | |
| OPERATOR G | C | 50 | 0 | | | | | | | | 57 | 81% | | | 44 | 87% | 49 | 82% | C | | | C | |

EVALUATION RESULTS — SEWING SKILL DATA — DEVICE USAGE HISTORY DATA

EP 4 752 272 A1

# FIG.9

| OPERATOR NAME | OPERATOR SKILL | | OVERALL DEVICE LEVEL | BASE PROCESS / PROCESS DIFFICULTY | BASE PROCESS 1 — 100 | | BASE PROCESS 2 — 80 | | BASE PROCESS 3 — 100 | | BASE PROCESS 4 — 70 | | BASE PROCESS 5 — 90 | | BASE PROCESS 6 — 50 | | BASE PROCESS 7 — 60 | | DEVICE LEVEL FOR EACH TYPE | | | | |
|---|---|---|---|---|---|---|---|---|---|---|---|---|---|---|---|---|---|---|---|---|---|---|---|
| | | | | | | | | | | | | | | | | | | | TYPE 1 | TYPE 2 | TYPE 3 | TYPE 4 | TYPE 5 |
| OPERATOR A | S | 97 | 5 | SKILL POINT/ WORK PROCESS EFFICIENCY | 98 | 98% | 82 | 102% | 95 | 95% | 86 | 123% | 99 | 110% | 65 | 130% | 66 | 110% | A | A | A | A | A |
| OPERATOR B | S | 93 | 5 | | 85 | 85% | 76 | 95% | 97 | 97% | 82 | 117% | 96 | 105% | 63 | 125% | 72 | 120% | A | A | A | A | A |
| OPERATOR C | A | 75 | 4 | | | | 74 | 92% | | | 64 | 92% | 87 | 97% | 49 | 98% | 61 | 101% | A | B | B | | B |
| OPERATOR D | A | 85 | 2 | | | | 70 | 87% | 97 | 97% | 60 | 85% | 87 | 97% | 48 | 95% | 58 | 97% | B | | C | B | C |
| OPERATOR E | B | 64 | 2 | | | | 70 | 87% | 65 | 65% | 58 | 83% | | | 47 | 93% | 52 | 87% | B | | B | | C |
| OPERATOR F | C | 50 | 1 | | | | | | 52 | 52% | 43 | 62% | 45 | 50% | 46 | 92% | 51 | 85% | | C | B | | |
| OPERATOR G | C | 50 | 0 | | | | | | | | 57 | 81% | | | 45 | 90% | 49 | 82% | C | | | C | |

# FIG.10

/G4

Maximum number
of points      [ 3 ]

Skill level thresholds

S   [ 90 ]   ~

A   [ 70 ]   ~

B   [ 60 ]   ~

C   [ 50 ]   ~

D    0    ~

Device level thresholds

A   [ 1000 ]   or more

B   [ 500 ]   or more

C   [ 100 ]   or more

Aggregation date

[ Last day of the month ▽ ]

[ Modify ]   [ Save ]   [ Cancel ]

## FIG.11

| Last day of the month | ▽ |
|---|---|
| 23 th | ∧ |
| 24 th | |
| 25 th | |
| 26 th | |
| 27 th | |
| 28 th | |
| Last day of the month | ∨ |

## FIG.12

```
                    ┌─────────┐
                    │  START  │
                    └────┬────┘
                         │         ┌──────┐
                         ▼         │      │
                    ◇─────────◇ ─S1│      │
                   WORK START? ────┘      │
                    ◇─────────◇      No   │
                         │ Yes
                         ▼
                    ◇─────────◇ ─S3
                   WORK PROCESS ──────────────┐
                    SELECTED?         No      │
                    ◇─────────◇               │
                         │ Yes               │
                         ▼ ─S5                ▼ ─S7
              ┌──────────────────┐  ┌──────────────────┐
              │ SELECTED WORK    │  │ PREVIOUS WORK    │
              │ PROCESS          │  │ PROCESS          │
              └────────┬─────────┘  └────────┬─────────┘
                       │◄────────────────────┘
                       ▼
                  ◇─────────◇ ─S9
                 THREAD CUTTING? ───────┐
                  ◇─────────◇    No     │
                       │ Yes            │
                       ▼ ─S11           │
              ┌──────────────────┐      │
              │ RECORD TIME OF   │      │
              │ THREAD CUTTING   │      │
              └────────┬─────────┘      │
                       │◄───────────────┘
                       ▼
                  ◇─────────◇ ─S13
          No ───  WORK END?
                  ◇─────────◇
                       │ Yes
                       ▼ ─S15
              ┌──────────────────┐
              │ TRANSMIT         │
              │ OPERATION        │
              │ INFORMATION      │
              └────────┬─────────┘
                       ▼
                    ┌────────┐
                    │  END   │
                    └────────┘
```

# FIG.13

```
              ┌─────────────┐
              │    START    │
              └──────┬──────┘
                     │
    ┌────────────────▼───────────────────┐
    │ CALCULATE IDEAL WORK TIME FOR       │  S31
    │ ACHIEVED NUMBER OF PIECES OF EACH   │
    │ WORK PROCESS BELONGING TO BASE      │
    │ PROCESS                             │
    └────────────────┬───────────────────┘
                     │
    ┌────────────────▼───────────────────┐
    │ CALCULATE TOTAL WORK TIME OF EACH   │  S33
    │ WORK PROCESS BELONGING TO BASE      │
    │ PROCESS                             │
    └────────────────┬───────────────────┘
                     │
    ┌────────────────▼───────────────────┐
    │ CALCULATE WORK PROCESS EFFICIENCY   │  S35
    │ OF BASE PROCESS                     │
    └────────────────┬───────────────────┘
                     │
    ┌────────────────▼───────────────────┐
    │ CALCULATE SKILL POINT OF BASE       │  S37
    │ PROCESS                             │
    └────────────────┬───────────────────┘
                     │
    ┌────────────────▼───────────────────┐
    │ CALCULATE OPERATOR SKILL            │  S39
    └────────────────┬───────────────────┘
                     │
    ┌────────────────▼───────────────────┐
    │ DETERMINE RANK OF OPERATOR SKILL    │  S41
    └────────────────┬───────────────────┘
                     │
              ┌──────▼──────┐
              │     END     │
              └─────────────┘
```

27

## FIG.14

```
                    ┌─────────────┐
                    │    START    │
                    └──────┬──────┘
                           │
                           ▼
┌──────────────────────────────────────────┐     S51
│  CALCULATE AND SUM NUMBER OF              │
│  TIMES OF USE FROM ACHIEVED               │
│  NUMBERS OF PIECES OF EACH SEWING         │
│  MACHINE BELONGING TO DEVICE TYPE         │
└──────────────────────┬───────────────────┘
                       │
                       ▼
┌──────────────────────────────────────────┐     S53
│  EVALUATE DEVICE LEVEL BY RANKING         │
│  BASED ON NUMBER OF TIMES OF USE          │
│  OF EACH DEVICE TYPE                      │
└──────────────────────┬───────────────────┘
                       │
                       ▼
┌──────────────────────────────────────────┐     S55
│  COUNT NUMBERS OF DEVICE LEVEL A          │
│  AND DEVICE LEVEL B AND DETERMINE         │
│  OVERALL DEVICE LEVEL                     │
└──────────────────────┬───────────────────┘
                       │
                       ▼
                ┌─────────────┐
                │     END     │
                └─────────────┘
```

FIG.15

```
                          ┌─────────┐
                          │  START  │
                          └────┬────┘
                               │
                               ▼                    S71
                      ◇─────────────────◇
                      │ AGGREGATION DATE? │──────────────┐
                      ◇─────────────────◇      No        │
                               │                         │
                             Yes           S73           │
                               ▼                         │
                      ┌─────────────────────┐            │
                      │ CALCULATE OPERATOR SKILL │        │
                      └──────────┬──────────┘            │
                                 │          S75           │
                                 ▼                        │
                      ┌─────────────────────┐            │
                      │ CALCULATE OVERALL DEVICE │        │
                      │        LEVEL          │           │
                      └──────────┬──────────┘            │
                                 │          S77           │
                                 ▼                        │
                      ┌─────────────────────┐            │
                      │    COMPARISON WITH   │            │
                      │  PREVIOUS PARAMETERS  │            │
                      └──────────┬──────────┘            │
                                 │         S79            │
                                 ▼                        │
                           ◇───────────◇                 │
                           │    ARE     │                 │
                           │ THERE IMPROVED │─────────┐   │
                           │ PARAMETERS?  │   No       │   │
                           ◇───────────◇             │   │
                                 │ Yes                │   │
                         S81     ▼            S83     ▼   │
              ┌──────────────────────┐  ┌──────────────────────┐
              │  DISPLAY IMPROVED     │  │ DISPLAY ALL PARAMETERS IN │
              │ PARAMETERS IN IDENTIFIABLE │ │ NORMAL STATE IN TABLE │
              │  STATE IN TABLE FORMAT │  │      FORMAT           │
              └──────────┬───────────┘  └──────────┬───────────┘
                         │                         │
                         └──────────►◄─────────────┘
                               │
                               ▼
                          ┌─────────┐
                          │   END   │
                          └─────────┘
```

## EUROPEAN SEARCH REPORT

Application Number

EP 25 21 9012

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 102 250 598 B1 (HOJEON LTD [KR]; SEOUL NAT UNIV R&DB FOUNDATION [KR]) 12 May 2021 (2021-05-12) | 1-4 | INV. D05B19/02 D05B25/00 |
| A | * the whole document * | 5,6 | G06Q10/0639 |
| | ----- | | |
| A | KR 102 571 599 B1 (KOLON GLOTECH INC [KR]; S V GLOBAL CO LTD [KR]) 28 August 2023 (2023-08-28) * the whole document * | 1-6 | |
| | ----- | | |
| A | EP 3 859 070 A1 (JUKI KK [JP]) 4 August 2021 (2021-08-04) * the whole document * | 1-6 | |
| | ----- | | |

**TECHNICAL FIELDS SEARCHED (IPC)**

D05B
G06Q

The present search report has been drawn up for all claims

| Place of search | Date of completion of the search | Examiner |
|---|---|---|
| Munich | 17 December 2025 | Braun, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 752 272 A1**

## ANNEX TO THE EUROPEAN SEARCH REPORT
## ON EUROPEAN PATENT APPLICATION NO.

EP 25 21 9012

17-12-2025

| Patent document cited in search report | | Publication date | Patent family member(s) | | Publication date |
|---|---|---|---|---|---|
| KR 102250598 | B1 | 12-05-2021 | NONE | | |
| KR 102571599 | B1 | 28-08-2023 | NONE | | |
| EP 3859070 | A1 | 04-08-2021 | CN | 113253680 A | 13-08-2021 |
| | | | EP | 3859070 A1 | 04-08-2021 |
| | | | JP | 7460376 B2 | 02-04-2024 |
| | | | JP | 2021117815 A | 10-08-2021 |
| | | | US | 2021232127 A1 | 29-07-2021 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020130767 A